**Europäisches Patentamt**

(19) **European Patent Office** (11) Numéro de publication: **0 010 999**
**A1**

**Office européen des brevets**

(12) # DEMANDE DE BREVET EUROPEEN

(21) Numéro de dépôt: **79400675.9**  (51) Int. Cl.³: **F 16 D 3/84,** F 16 D 3/20,
 F 16 D 3/22

(22) Date de dépôt: **21.09.79**

---

(30) Priorité: **27.10.78 FR 7830553**

(43) Date de publication de la demande: **14.05.80**
**Bulletin 80/10**

(84) Etats contractants désignés: **DE GB IT SE**

(71) Demandeur: **SOCIETE ANONYME AUTOMOBILES
CITROEN regie par les articles 118 à 150 de la loi sur
les sociétés commerciales, 117 à 167, Quai André
Citroen, F-75747 Paris Cedex 15 (FR)**
Demandeur: **AUTOMOBILES PEUGEOT, 75, avenue de
la Grande Armée, F-75116 Paris (FR)**

(72) Inventeur: **Goguet, Jean André, 18, Villa de l'Aigle,
F-91470 Limours (FR)**

(74) Mandataire: **Michardiere, Bernard et al, Cabinet
Plasseraud 84, rue d'Amsterdam, F-75009 Paris (FR)**

---

(54) **Perfectionnements apportés aux joints universels, notamment pour transmissions de véhicules automobiles.**

(57) Joint universel comprenant un élément d'entraînement muni d'au moins deux chemins de roulement coopérant avec des galets ou d'autres organes de roulement portés par un moyeu solidaire d'un arbre mené, la surface extérieure de l'élément d'entraînement étant sensiblement parallèle à la surface intérieure de cet élément et comportant des zones concaves.

Il comporte une pièce (8) rapportée ayant une surface intérieure (9) qui épouse la surface extérieure (4) dudit élément (2), tandis que la surface extérieure (10) de cette pièce (8) a un contour convexe pour servir de support à une gaine d'étanchéité, la pièce (8) assurant un remplissage des zones concaves (6); cette pièce (8) est notamment en matière plastique surmoulée sur l'élément (2).

EP 0 010 999 A1

Perfectionnements apportés aux joints universels, notamment pour transmissions de véhicules automobiles.

L'invention est relative aux joints universels, notamment pour transmission de véhicule automobile, du genre de ceux qui comprennent un élément d'entraînement, lié à un arbre menant, sensiblement en forme de bol et muni d'au moins deux chemins de roulement coopérant avec des galets portés par un moyeu solidaire d'un arbre mené, la surface extérieure de l'élément d'entraînement étant sensiblement parallèle à la surface intérieure de cet élément de telle sorte que cette surface extérieure comporte des zones concaves situées, angulairement, entre les chemins de roulement, une gaine d'étanchéité étant disposée autour du bol et de l'arbre mené.

Dans de tels joints universels, la fixation de la gaine d'étanchéité sur l'extrémité de l'élément d'entraînement pose des problèmes. En effet, cette gaine d'étanchéité vient recouvrir la surface extérieure de l'extrémité de l'élément d'entraînement ; or, la présence de zones concaves dans cette surface extérieure constitue une gêne pour la réalisation d'une bonne étanchéité par serrage de la gaine d'étanchéité autour de l'élément d'entraînement.

Diverses solutions à ce problème ont déjà été proposées ; ces solutions demandent, cependant, à être améliorées, notamment au point de vue de la simplicité de la réalisation et de la réduction du prix de revient, ainsi qu'au point de vue de l'étanchéité réalisée entre l'élément d'entraînement et la gaine.

L'invention a pour but, surtout, de rendre les joints universels du genre en question tels qu'ils répondent mieux que jusqu'à présent aux diverses exigences de la pratique et notamment tels que les inconvénients rappelés ci-dessus soient supprimés ou tout au moins réduits.

Selon l'invention, un joint universel, du genre défini précédemment, est caractérisé par le fait qu'il comporte une pièce rapportée autour de l'extrémité ouverte de l'élément d'entraînement, cette pièce ayant

2

0010999

une surface intérieure qui épouse la surface extérieure dudit élément, tandis que la surface extérieure de cette pièce a une section transversale dont le contour est entièrement convexe, cette surface extérieure étant notamment de révolution et plus particulièrement cylindrique, de manière à servir de support à la gaine d'étanchéité maintenue par serrage sur ladite pièce, laquelle assure un remplissage des susdites zones concaves de la surface extérieure de l'élement d'entraînement.

De préférence, cette pièce rapportée est en matière plastique et est surmoulée sur ledit élément d'entraînement.

L'arrêt axial de cette pièce rapportée, par rapport à l'élément d'entraînement, est avantageusement assuré par des encoches s'étendant suivant le sens circonférentiel, dans des parties convexes de l'élément d'entraînement, situées angulairement entre les zones concaves, ces encoches coopérant avec des nervures de la pièce rapportée.

La surface extérieure de la pièce rapportée présente, à son extrémité située en bordure de l'élément d'entraînement, un bourrelet périphérique, notamment à section semi-circulaire, propre à coopérer avec la gaine d'étanchéité.

Les parties de la pièce rapportée assurant le remplissage des zones concaves de la surface extérieure de l'élément d'entraînement comportent, de préférence, des alvéoles.

L'invention concerne également une pièce destinée à être rapportée sur un élément d'entraînement d'un joint universel du genre défini précédemment, pièce rapportée qui présente une surface intérieure propre à épouser la surface extérieure de l'élément d'entraînement tandis que la surface extérieure de cette pièce a une section transversale dont le contour est entièrement convexe, cette surface extérieure étant notamment de révolution et plus particulièrement cylindrique, de manière à servir de support à la gaine d'étanchéité, cette pièce assurant un remplissage des zones concaves de la surface extérieure de l'élément d'entraînement.

L'invention consiste, mises à part les dispositions exposées ci-dessus, en certaines autres dispositions dont il sera plus explicitement question ci-après à propos d'un mode de réalisation particulier décrit avec référence aux dessins ci-annexés, mais qui n'est nullement limitatif.

La figure 1, de ces dessins, est une coupe axiale de l'élément d'entraînement et de la pièce rapportée d'un joint universel selon l'invention, un des galets et le moyeu solidaire de l'arbre mené étant représentés schématiquement.

La figure 2 est une vue de gauche par rapport à la figure 1, de l'élément d'entraînement.

La figure 3, enfin, est un détail de la figure 1 représenté à plus grande échelle.

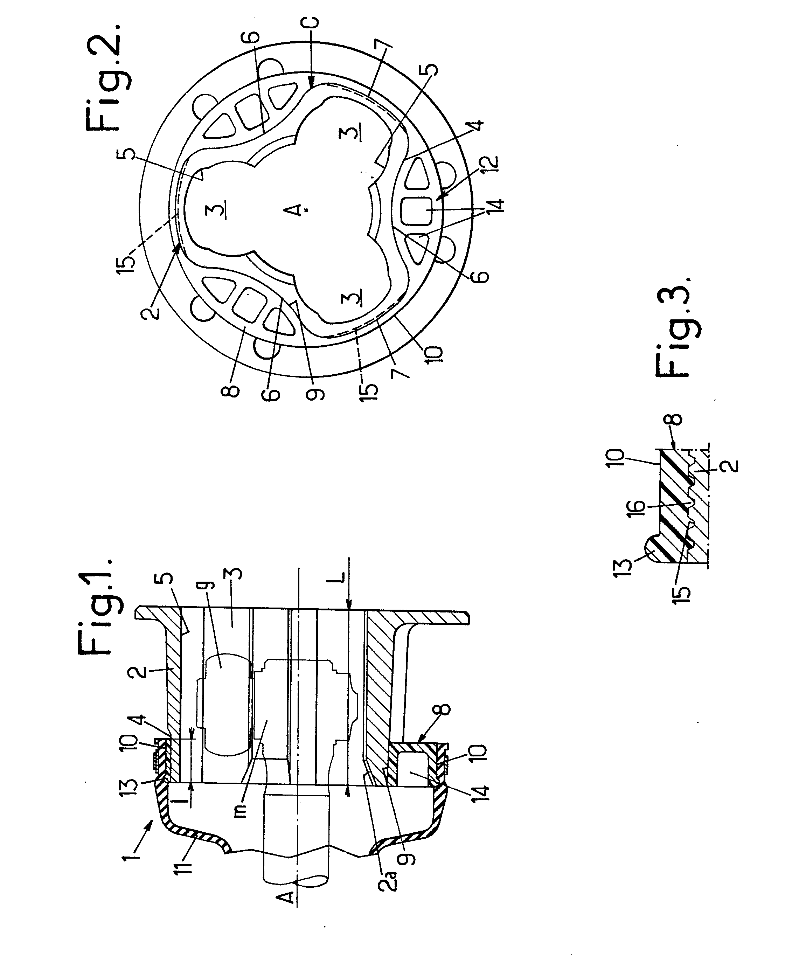

En se reportant aux dessins, et plus particulièrement à la figure 1, on peut voir un joint universel 1 du type tripode, pour transmission de véhicule automobile. Ce joint comprend un élément d'entraînement 2, lié à un arbre menant (non montré) ; cet élément 2 a sensiblement la forme d'un bol et est muni, dans le cas d'un joint tripode, de trois chemins de roulement 3, rectilignes, parallèles à l'axe du bol 2 et régulièrement espacés de 120°, comme bien visible sur la figure 2.

Ces chemins de roulement 3 sont propres à coopérer avec des galets g, dont un est schématiquement représenté sur la figure 1, portés par un moyeu m solidaire d'un arbre mené.

La surface extérieure 4 (fig. 2) de l'élément d'entraînement 2 est sensiblement parallèle à la surface intérieure 5 de cet élément. Cette surface extérieure 4 comporte, de ce fait, des zones concaves 6 situées, angulairement, entre les chemins de roulement 3. Les zones 7 de la surface extérieure ayant même position angulaire que les chemins de roulement 3 sont convexes et forment des protubérances ou des saillies par rapport

4   0010999

aux zones concaves 6. L'élément d'entraînement est ainsi réalisé avec un minimum de matière relativement coûteuse.

On voit, sur la figure 2, que le contour extérieur C de l'élément d'entraînement 2 a une forme rappelant celle d'une étoile à trois branches dont les sommets seraient aplatis.

Une pièce 8 est rapportée autour de l'extrémité ouverte 2a de l'élément d'entraînement 2. Cette pièce 8 a une surface intérieure 9 qui épouse la surface extérieure 4 de l'élément 2 ; la surface extérieure 10 de la pièce 8 est cylindrique, de révolution, et coaxiale à l'élément 2, d'axe A.

Cette surface extérieure cylindrique 10 sert de support à une gaine d'étanchéité 11 qui entoure l'extrémité ouverte de l'élément 2 ; l'autre extrémité (non représentée) de la gaine d'étanchéité 11 est serrée autour de l'arbre mené.

Comme bien visible sur la figure 2, la pièce rapportée 8 assure un remplissage des zones concaves 6 par des parties telles que 12, de la pièce 8, ayant une plus forte épaisseur.

La pièce rapportée 8 est avantageusement réalisée en matière plastique ; elle ne s'étend, axialement, depuis l'extrémité ouverte de l'élément 2, que sur une longueur 1 réduite par rapport à la longueur totale L de l'élément 2. Par exemple le rapport L/1 est supérieur à trois.

La pièce rapportée 8 est avantageusement surmoulée sur l'extrémité de l'élément 2.

Comme visible sur les figures 1 et 3, la surface extérieure 10 de la pièce 8 est munie, à son extrémité située au niveau de l'extrémité ouverte de l'élément 2, d'un bourrelet périphérique 13 à section semi-circulaire qui coopère avec la gaine 11. Cette dernière s'étend autour de la surface 10, au-delà du bourrelet 13 ; la gaine 11 peut être serrée contre la surface 10 par tout moyen approprié, tel qu'un collier ou serre-joint.

Des alvéoles 14 borgnes, s'ouvrant du côté de la gaine d'étanchéité 11, peuvent être prévus dans les parties 12 plus épaisses de la pièce 8 pour économiser la matière plastique et faciliter le moulage.

Le blocage, suivant le sens axial, de la pièce rapportée 8 par rapport à l'élément 2 peut être assuré par la coopération d'encoches 15 (fig. 3), parallèles entre elles et orientées dans le sens circonférentiel, prévues dans les zones convexes 7 de l'élément 2, avec des nervures 16 de la pièce 8, obtenues lors du surmoulage. Ce système d'encoches et de nervures pourrait être remplacé par des nervures prévues sur les zones convexes 7 et des encoches produites lors du surmoulage dans la pièce 8.

A titre d'exemple, la pièce 8 peut être réalisée en polyacétal.

La solution de l'invention permet de réaliser de manière économique l'élément d'entraînement 2 d'un joint universel, avec un minimum de matière tout en assurant une "mise au rond" c'est-à-dire une surface de support à contour convexe, à l'extrémité ouverte de cet élément pour coopérer avec la gaine d'étanchéité. On obtient ainsi une bonne étanchéité au niveau de l'extrémité de la gaine serrée sur l'élément 2.

Il est clair que la solution la plus simple consiste à prévoir une surface extérieure 10 de révolution, et cylindrique, comme montrée sur les dessins.

Il suffit, cependant, que cette surface extérieure 10 ait une section transversale (suivant un plan perpendiculaire à l'axe A) dont le contour soit entièrement convexe. Un contour légèrement elliptique pourrait éventuellement convenir. Dans le cas où la surface extérieure 10 est de révolution, il n'est pas indispensable qu'elle soit cylindrique ; elle pourrait, par exemple, être légèrement tronconique.

Il convient de noter que le terme "galet" utilisé dans la description et dans les revendications doit être compris dans un sens général comme désignant tout organe de roulement.

0010999

REVENDICATIONS

1. Joint universel, notamment pour transmission de véhicule automobile, comprenant un élément d'entraînement lié à un arbre menant, sensiblement en forme de bol et muni d'au moins deux chemins de roulement coopérant avec des galets portés par un moyeu solidaire d'un arbre mené, la surface extérieure de l'élément d'entraînement étant sensiblement parallèle à la surface intérieure de cet élément de telle sorte que cette surface extérieure comporte des zones concaves situées, angulairement, entre les chemins de roulement, une gaine d'étanchéité étant disposée autour du bol et de l'arbre mené, caractérisé par le fait qu'il comporte une pièce rapportée autour de l'extrémité ouverte de l'élément d'entraînement, cette pièce ayant une surface intérieure qui épouse la surface extérieure dudit élément, tandis que la surface extérieure de cette pièce a une section transversale dont le contour est entièrement convexe de manière à servir de support à la gaine d'étanchéité maintenue par serrage sur ladite pièce, laquelle assure un remplissage des susdites zones concaves de la surface extérieure de l'élément d'entraînement.

2. Joint universel selon la revendication 1, caractérisé par le fait que la surface extérieure de la pièce rapportée est de révolution.

3. Joint universel selon l'une quelconque des revendications 1 ou 2, caractérisé par le fait que la surface extérieure de la pièce rapportée est cylindrique.

4. Joint universel selon l'une quelconque des revendications précédentes, caractérisé par le fait que la pièce rapportée est en matière plastique.

5. Joint universel selon l'une quelconque des revendications précédentes, caractérisé par le fait que la pièce rapportée est surmoulée sur l'élément d'entraînement.

6. Joint universel selon l'une quelconque des revendications précédentes, caractérisé par le fait que l'arrêt axial de la pièce rapportée, par rapport à l'élément d'entraînement est assuré par un système d'encoches et de nervures s'étendant suivant le sens circonférentiel.

7. Joint universel selon l'une quelconque des revendications précédentes, caractérisé par le fait que la surface extérieure de la pièce rapportée présente, à son extrémité située en bordure de l'élément d'entraînement, un bourrelet périphérique, notamment à section semi-circulaire.

8. Joint universel selon l'une quelconque des revendications précédentes, caractérisé par le fait que les parties de la pièce rapportée assurant le remplissage des zones concaves de la surface extérieure de l'élément d'entraînement comportent des alvéoles.

9. Pièce destinée à être rapportée sur un élément d'entraînement d'un joint universel selon l'une quelconque des revendications précédentes, caractérisée par le fait qu'elle présente une surface intérieure propre à épouser la surface extérieure de l'élément d'entraînement du joint tandis que la surface extérieure de cette pièce a une section transversale dont le contour est entièrement convexe, cette surface extérieure étant notamment de révolution et plus particulièrement cylindrique, de manière à servir de support à une gaine d'étanchéité, cette pièce assurant un remplissage des zones concaves de la surface extérieure de l'élément d'entraînement.

# Fig.1.

# Fig.2.

# Fig.3.

0010999

Office européen
des brevets

**RAPPORT DE RECHERCHE EUROPEENNE**

0010999
Numéro de la demande

EP 79 40 0675

| Catégorie | Citation du document avec indication, en cas de besoin, des parties pertinentes | Revendica-tion concernee |
|---|---|---|
| | FR - A - 2 230 895 (GLAENZER SPICER) <br> * Page 2, lignes 36 à 38; figure 1 * | 1-3, 8,9 |
| | FR - A - 2 169 450 (GLAENZER SPICER) <br> * Page 3, ligne 38 à page 4, ligne 2; figures 8,9 * | 1-3, 8,9 |
| | FR - A - 1 268 917 (B.R.D.) <br> * Page 1, colonne de droite, dernier paragraphe, figure 2 * | 1,7,9 |
| | FR - A - 2 172 580 (GLAENZER SPICER) <br> * Page 3, lignes 17 à 22; page 5, lignes 12 à 27 * | 4,6,8 |

## DOCUMENTS CONSIDERES COMME PERTINENTS

**CLASSEMENT DE LA DEMANDE (Int. Cl. ⁴)**

F 16 D 3/84
3/20
3/22

**DOMAINES TECHNIQUES RECHERCHES (Int. Cl. ³)**

F 16 D 3/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 11-01-1980 | BALDWIN |

OEB Form 1503.1 06.78